# EUROPÄISCHE PATENTSCHRIFT

(11) **EP 2 308 150 B1**
(45) Veröffentlichungstag und Bekanntmachung des Hinweises auf die Patenterteilung: **04.07.2012**
(21) Anmeldenummer: 09780559.2
(22) Anmeldetag: 14.07.2009
(51) Int. Cl.: H02K 1/20, H02K 1/32, H02K 5/20

(54) **ELEKTRISCHE MASCHINE IN HOHER SCHUTZART MIT VERBESSERTER LÄUFERKÜHLUNG**
ELECTRIC MASCHINE IN A HIGH PROTECTION CATEGORY WITH IMPROVED ROTOR COOLING
MACHINE ÉLECTRIQUE À HAUT DEGRÉ DE PROTECTION, À REFROIDISSEMENT DE ROTOR AMÉLIORÉ

(30) Priorität: 01.08.2008 DE 102008036124
(43) Veröffentlichungstag der Anmeldung: 13.04.2011
(73) Patentinhaber: Siemens Aktiengesellschaft, 80333 München (DE)
(72) Erfinder: BRANDL, Konrad, 93107 Thalmassing (DE); GRILLENBERGER, Reiner, 91575 Windsbach (DE); WEISS, Sebastian, 90522 Oberasbach (DE); AF URSIN, Ilkka, 20900 Turku (FI)
(86) Internationale Anmeldenummer: PCT/EP2009/058982
(87) Internationale Veröffentlichungsnummer: WO 2010/012585

(56) Entgegenhaltungen:
- DE-A1- 4 443 427
- DE-A1- 10 247 310
- DE-A1- 19 606 146
- DE-A1-102006 006 839
- US-A1- 2004 150 270
- US-A1- 2006 226 717

## Beschreibung

Die vorliegende Erfindung betrifft eine elektrische Maschine
- wobei die elektrische Maschine einen Ständer und eine Läuferwelle aufweist,
- wobei die Läuferwelle relativ zum Ständer um eine Wellenachse drehbar gelagert ist, so dass die Wellenachse eine Axialrichtung, eine Radialrichtung und eine Tangentialrichtung definiert,
- wobei auf der Läuferwelle ein Läufer angeordnet ist, der mit dem Ständer elektrisch zusammenwirkt,
- wobei der Läufer mindestens einen axial durchgehenden Läuferaxialkanal aufweist,
- wobei der Ständer ein Ständerblechpaket aufweist, das sich in Axialrichtung gesehen über den Läufer erstreckt,
- wobei das Ständerblechpaket in einer zur Axialrichtung orthogonalen Schnittebene gesehen den Läufer vollständig umgibt, so dass in der Schnittebene gesehen ein geschlossener Läuferinnenraum gebildet ist,
- wobei auf das Ständerblechpaket axial beidseitig jeweils eine Abdeckung aufgesetzt ist,
- wobei mindestens eine der Abdeckungen eine Mittenausnehmung für den Durchtritt der Läuferwelle aufweist,
- wobei das Ständerblechpaket mindestens einen in Axialrichtung gesehen durchgehenden Ständeraxialkanal aufweist, der in der Schnittebene gesehen vollständig geschlossen ist,
- wobei die Abdeckungen derart ausgebildet sind, dass sie im Zusammenwirken mit dem Ständerblechpaket jeweils mindestens einen in Radialrichtung verlaufenden Radialkanal bilden,
- wobei die Radialkanäle den mindestens einen Ständeraxialkanal strömungstechnisch mit dem Läuferinnenraum verbinden, im Übrigen aber geschlossen sind.

Derartige elektrische Maschinen werden unter anderem in der Schutzart IP 55 angeboten. In dieser Ausgestaltung sind die elektrischen Maschinen in der Regel gehäuselos ausgebildet.

Durch die Ständeraxialkanäle fließt im Stand der Technik ein Kühlmedium, meistens Luft. Mittels des Kühlmediums wird der Ständer gekühlt.

Abwärme entsteht jedoch nicht nur im Ständer, sondern auch im Läufer. Im Stand der Technik ist es nicht möglich, den Läufer direkt zu kühlen. Die im Läufer entstehende Abwärme muss daher über den Luftspalt zwischen Ständer und Läufer sowie die Ständergeometrie abgeführt werden. Im Ergebnis kann die im Läufer entstehende Abwärme daher nur in begrenztem Umfang abgeführt werden. Auf Grund dieses Umstands kann die elektrische Maschine gegenüber einer vergleichbaren elektrischen Maschine, bei welcher der Läufer direkt gekühlt wird, nur mit erheblich reduzierter Maschinenleistung betrieben werden. Die Reduktion in der Maschinenleistung beträgt bis zu 60 %.

Im Stand der Technik wird die schlechte Kühlung oftmals in Kauf genommen, da keine Lösung bekannt ist, auf einfache Weise eine bessere Kühlung des Läufers zu realisieren, ohne die hohe Schutzart IP55 aufgeben zu müssen.

Die DE 44 43 427 A1 offenbart eine elektrische Maschine,
- wobei die elektrische Maschine einen Ständer und eine Läuferwelle aufweist,
- wobei die Läuferwelle relativ zum Ständer um eine Wellenachse drehbar gelagert ist, so dass die Wellenachse eine Axialrichtung, eine Radialrichtung und eine Tangentialrichtung definiert,
- wobei auf der Läuferwelle ein Läufer angeordnet ist, der mit dem Ständer elektrisch zusammenwirkt,
- wobei der Läufer mindestens einen axial durchgehenden Läuferaxialkanal aufweist,
- wobei der Ständer ein Ständerblechpaket aufweist, das sich in Axialrichtung gesehen über den Läufer erstreckt,
- wobei das Ständerblechpaket in einer zur Axialrichtung orthogonalen Schnittebene gesehen den Läufer vollständig umgibt, so dass in der Schnittebene gesehen ein geschlossener Läuferinnenraum gebildet ist,
- wobei das Ständerblechpaket von einem Gehäuse umgeben ist, auf das axial beidseitig jeweils eine Abdeckung aufgesetzt ist,
- wobei mindestens eine der Abdeckungen eine Mittenausnehmung für den Durchtritt der Läuferwelle aufweist,
- wobei das Ständerblechpaket mit dem Gehäuse mindestens einen in Axialrichtung gesehen durchgehenden Ständeraxialkanal bildet, der in der Schnittebene gesehen vollständig geschlossen ist,
- wobei die Abdeckungen derart ausgebildet sind, dass sie im Zusammenwirken mit dem Ständerblechpaket jeweils mindestens einen in Radialrichtung verlaufenden Radialkanal bilden,
- wobei die Radialkanäle den mindestens einen Ständeraxialkanal strömungstechnisch mit dem Läuferinnenraum verbinden, im Übrigen aber geschlossen sind,
- wobei zum Erzwingen einer Zwangskonvektion auf der Läuferwelle axial innerhalb der Abdeckungen mindestens ein als Lüfter wirkendes Element angeordnet ist.

Die DE 10 2006 006 839 A1 offenbart eine elektrische Maschine,
- wobei die elektrische Maschine einen Ständer und eine Läuferwelle aufweist,
- wobei die Läuferwelle relativ zum Ständer um eine Wellenachse drehbar gelagert ist, so dass die Wellenachse eine Axialrichtung, eine Radialrichtung und eine Tangentialrichtung definiert,
- wobei auf der Läuferwelle ein Läufer angeordnet ist, der mit dem Ständer elektrisch zusammenwirkt,
- wobei der Läufer mindestens einen axial durchgehenden Läuferaxialkanal aufweist,
- wobei der Ständer ein Ständerblechpaket aufweist, das sich in Axialrichtung gesehen über den Läufer erstreckt,
- wobei das Ständerblechpaket in einer zur Axialrichtung orthogonalen Schnittebene gesehen den Läufer vollständig umgibt, so dass in der Schnittebene gesehen ein geschlossener Läuferinnenraum gebildet ist,
- wobei das Ständerblechpaket axial und radial von einem Gehäuse umgeben ist,
- wobei das Gehäuse mindestens eine Mittenausnehmung für den Durchtritt der Läuferwelle aufweist,
- wobei das Ständerblechpaket mit dem Gehäuse mindestens einen in Axialrichtung gesehen durchgehenden Ständeraxialkanal bildet, der in der Schnittebene gesehen vollständig geschlossen ist,
- wobei das Gehäuse derart ausgebildet ist, dass es im Zusammenwirken mit dem Ständerblechpaket jeweils mindestens einen in Radialrichtung verlaufenden Radialkanal bilden,
- wobei die Radialkanäle den mindestens einen Ständeraxialkanal strömungstechnisch mit dem Läuferinnenraum verbinden, im Übrigen aber geschlossen sind.

Die Aufgabe der vorliegenden Erfindung besteht darin, eine elektrische Maschine der eingangs genannten Art derart auszugestalten, dass der Läufer auf einfache Weise besser gekühlt werden kann.

Die Aufgabe wird durch eine elektrische Maschine mit den Merkmalen des Anspruchs 1 gelöst. Vorteilhafte Ausgestaltungen der elektrischen Maschine sind Gegenstand der abhängigen Ansprüche 2 bis 8.

Erfindungsgemäß ist vorgesehen, eine elektrische Maschine der eingangs genannten Art dadurch auszugestalten,
- dass zum Erzwingen einer Zwangskonvektion auf der Läuferwelle axial innerhalb der Abdeckungen mindestens ein als Lüfter wirkendes Element angeordnet ist und
- dass das Ständerblechpaket weitere, in Axialrichtung gesehen durchgehende Ständeraxialkanäle aufweist, die strömungstechnisch von dem Läuferinnenraum getrennt sind.

Minimal kann es im Einzelfall ausreichen, dass ein einziger Ständeraxialkanal vorhanden ist. In der Regel sind jedoch mehrere Ständeraxialkanäle vorhanden. Insbesondere kann in dem üblichen Fall, dass das Ständerblechpaket in der Schnittebene gesehen eine quadratische Außenkontor aufweist, in der Nähe jeder Ecke der quadratischen Außenkontur jeweils mindestens ein Ständeraxialkanal angeordnet sein. Die Ständeraxialkanäle können hierbei insbesondere auf den Diagonalen der quadratischen Außenkontur angeordnet sein.

Die weiteren Ständeraxialkanäle können zum Kühlen des Ständerblechpakets mit Außenluft (oder einem anderen Kühlmedium, beispielsweise Wasser) verwendet werden. Eine Zwangskonvektion ist möglich, aber nicht zwingend.

Die weiteren Ständeraxialkanäle sind vorzugsweise nicht direkt auf den Diagonalen der quadratischen Außenkontur angeordnet.

In der Regel kapseln die Abdeckungen und das Ständerblechpaket den Läuferinnenraum in der Schutzart IP55 oder besser. In Einzelfällen ist jedoch auch eine geringere Schutzart möglich.

Es ist möglich, die Lagerung der Läuferwelle unabhängig von den Abdeckungen vorzunehmen. Vorzugsweise jedoch ist die Läuferwelle in den Abdeckungen gelagert.

Der Läufer kann nach Bedarf ausgebildet sein. Beispielsweise kann der Läufer ein Läuferblechpaket aufweisen, das seinerseits eine Läuferwicklung oder Permanentmagnete trägt.

Vorzugsweise ist das als Lüfter wirkende Element mit der Läuferwelle oder dem Läufer stoffschlüssig verbunden. Dadurch kann eine besonders stabile und im Dauerbetrieb zuverlässige Verbindung erreicht werden. Beispielsweise kann das Element an den Läufer angegossen sein.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: eine elektrische Maschine des Standes der Technik im Längsschnitt,
- FIG 2: einen Querschnitt durch die elektrische Maschine von FIG 1 entlang einer Linie II-II in FIG 1,
- FIG 3: eine erfindungsgemäße elektrische Maschine im Längsschnitt,
- FIG 4 bis 7: verschiedene perspektivische Darstellungen einer Abdeckung für die elektrische Maschine von FIG 3 und
- FIG 8: ein Detail von FIG 3 aus einer Richtung VIII-VIII in FIG 3 gesehen.

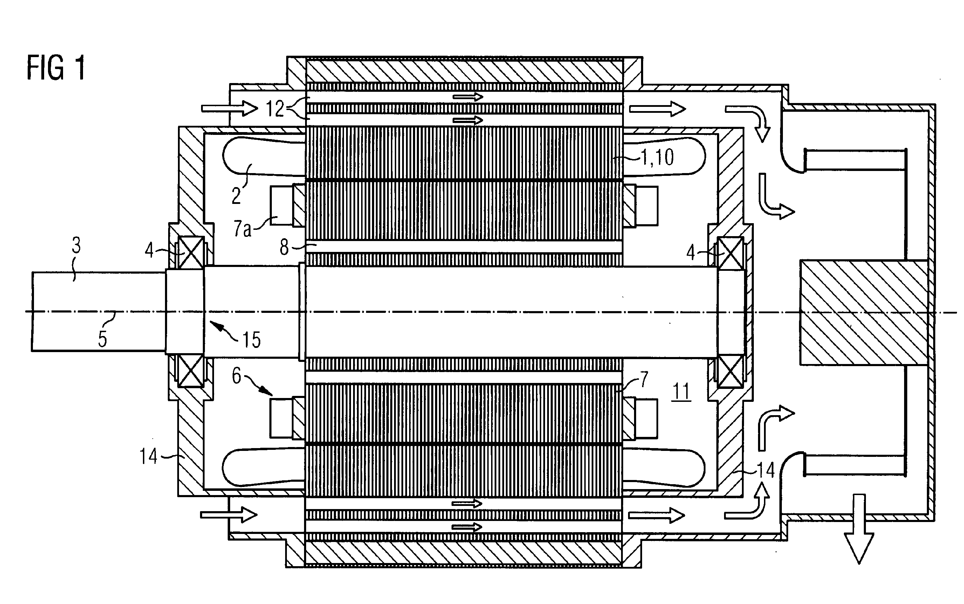

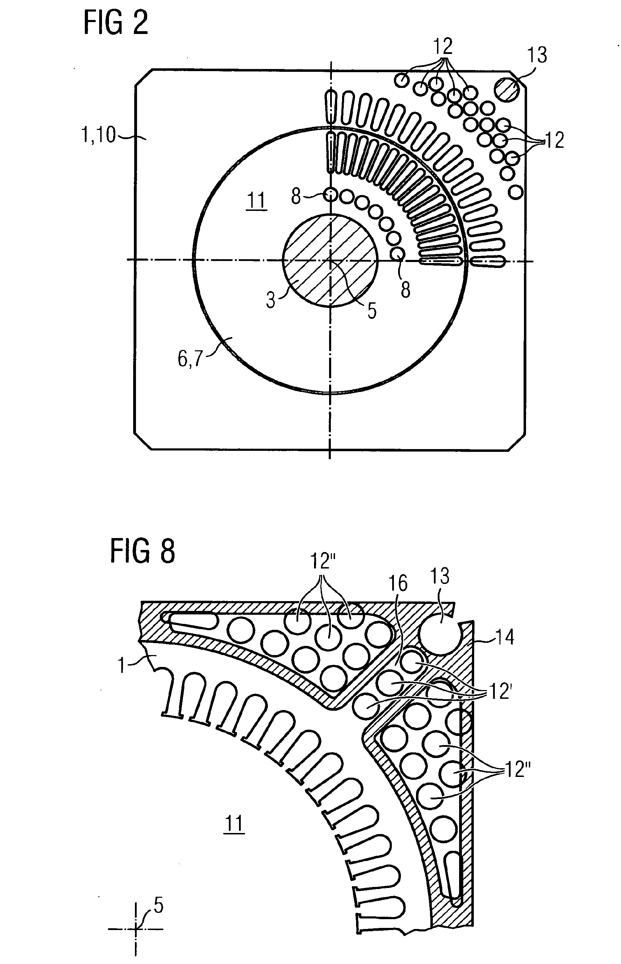

Gemäß den FIG 1 und 2 weist eine elektrische Maschine einen Ständer 1 auf. Der Ständer 1 trägt eine Ständerwicklung 2.

Die elektrische Maschine weist weiterhin eine Läuferwelle 3 auf. Die Läuferwelle 3 ist in Wellenlagern 4 gelagert. Auf Grund der Lagerung in den Wellenlagern 4 ist die Läuferwelle 3 um eine Wellenachse 5 relativ zum Ständer 1 drehbar.

Die Wellenachse 5 definiert eine Axialrichtung, eine Radialrichtung und eine Tangentialrichtung. Der Begriff "axial" bedeutet hierbei eine Richtung parallel zur Wellenachse 5. Der Begriff "radial" bedeutet eine Richtung orthogonal zur Axialrichtung, und zwar auf die Wellenachse 5 zu bzw. von der Wellenachse 5 weg. Der Begriff "tangential" bezeichnet eine Richtung orthogonal zur Axialrichtung und orthogonal zur Radialrichtung, also in einem radialen Abstand von der Wellenachse 5 um die Wellenachse 5 herum.

Auf der Läuferwelle 3 ist ein Läufer 6 angeordnet. Der Läufer 6 wirkt mit dem Ständer 1 elektrisch zusammen. Beispielsweise kann der Läufer 6 ein Läuferblechpaket 7 aufweisen, das seinerseits eine Läuferwicklung 7a oder Permanentmagnete trägt. Die Permanentmagnete sind in den FIG 1 und 2 nicht dargestellt.

Der Läufer 6 weist mindestens einen Läuferaxialkanal 8 auf. Der Läuferaxialkanal 8 ist hierbei axial durchgehend. Gemäß FIG 2 sind sogar mehrere derartige Läuferaxialkanäle 8 vorhanden. Die Anzahl von Läuferaxialkanälen 8 kann nach Bedarf gewählt werden. Beispielsweise können acht derartiger Läuferaxialkanäle 8 vorhanden sein.

Der Ständer 1 weist ein Ständerblechpaket 10 auf. Das Ständerblechpaket 10 erstreckt sich in Axialrichtung gesehen über den gesamten Läufer 6, also insbesondere über das Läuferblechpaket 7. Die einzelnen Ständerbleche des Ständerblechpakets 10 weisen hierbei in der Regel - siehe FIG 2 - in einer zur Axialrichtung orthogonalen Schnittebene gesehen eine quadratische Außenkontur auf. Diese Ausgestaltung ist üblich, jedoch nicht zwingend erforderlich.

Gemäß FIG 2 umgibt das Ständerblechpaket 10 in der Schnittebene gesehen den Läufer 6 vollständig. In der Schnittebene gesehen ergibt sich somit ein geschlossener Läuferinnenraum 11.

Das Ständerblechpaket 10 weist eine Vielzahl von Ständeraxialkanälen 12 auf. In Axialrichtung gesehen sind die Ständeraxialkanäle 12 durchgehend. In der Schnittebene gesehen sind sie vollständig geschlossen. Die Ständeraxialkanäle 12 werden im Betrieb der elektrischen Maschine von einem Kühlmedium - beispielsweise Kühlluft - durchströmt und kühlen so den Ständer 1 der elektrischen Maschine.

Die elektrische Maschine der FIG 1 und 2 weist weiterhin in den Ecken der Außenkontur Befestigungsausnehmungen 13 auf.

Die Befestigungsausnehmungen 13 dienen der Aufnahme von Axialbolzen, mittels derer die einzelnen Bleche des Ständerblechpakets 10 miteinander verbunden werden. Die Axialbolzen sind in den FIG 1 und 2 nicht dargestellt.

Gemäß FIG 1 sind auf das Ständerblechpaket 10 weiterhin axial beidseitig Abdeckungen 14 aufgesetzt. Mindestens eine der Abdeckungen 14 weist eine Mittenausnehmung 15 auf, so dass die Läuferwelle 3 durch die Mittenausnehmung 15 durchtreten kann. Mittels der Abdeckungen 14 und des Ständerblechpakets 10 wird der Läuferinnenraum 11 hermetisch gekapselt. Die Kapselung entspricht in der Regel der Schutzart IP55 oder besser.

Gemäß FIG 1 sind die Wellenlager 4, in denen die Läuferwelle 3 gelagert ist, in den Abdeckungen 14 angeordnet. Die Läuferwelle 3 ist daher in den Abdeckungen 14 gelagert. Diese Ausgestaltung ist jedoch nicht zwingend.

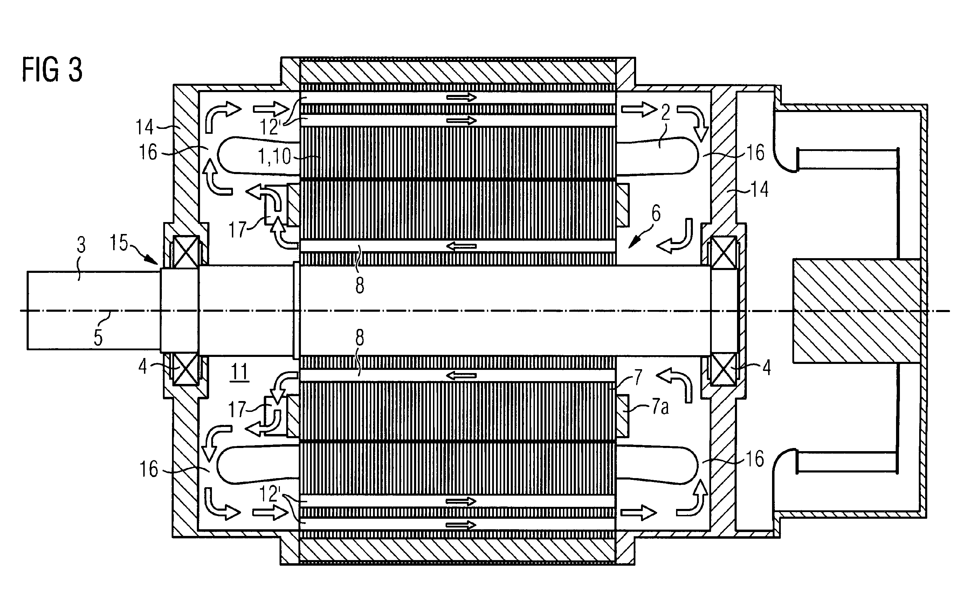

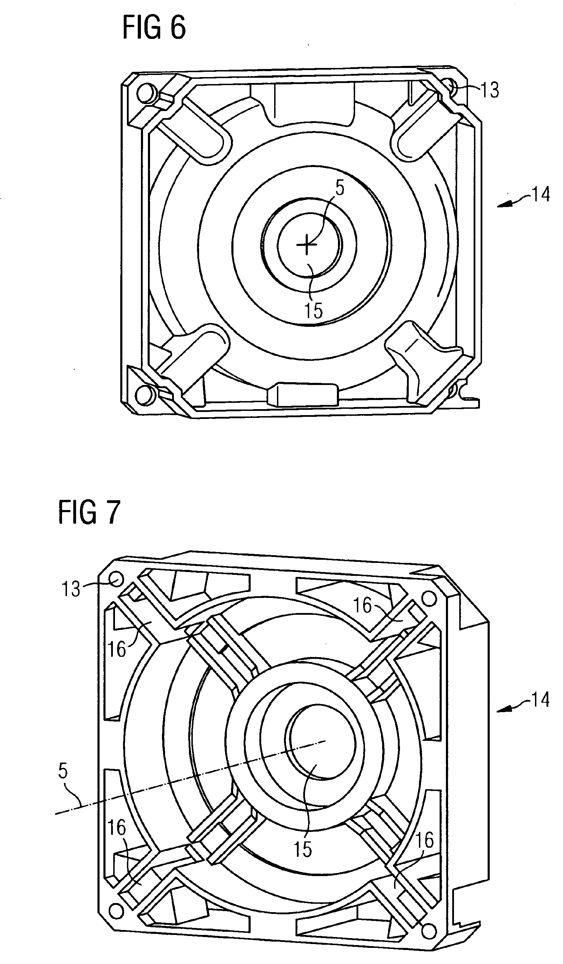

Die erfindungsgemäße elektrische Maschine, die nachfolgend in Verbindung mit den FIG 3 bis 8 erläutert wird, ist vom Ansatz her ebenso aufgebaut, wie dies obenstehend für die elektrische Maschine des Standes der Technik erläutert wurde. Nachfolgend werden daher für die gleichen Elemente der erfindungsgemäßen elektrischen Maschine die gleichen Bezugszeichen verwendet. Lediglich für die Ständeraxialkanäle werden anstelle des Bezugszeichens 12 die Bezugszeichen 12' und 12" verwendet. Mit dem Bezugszeichen 12' werden hierbei erste Ständeraxialkanäle bezeichnet, mit dem Bezugszeichen 12" zweite Ständeraxialkanäle. Der Grund für diese Unterscheidung wird aus den nachfolgenden Ausführungen ersichtlich werden.

Gemäß den FIG 3 bis 8 sind die Abdeckungen 14 derart ausgebildet, dass sie im Zusammenwirken mit dem Ständerblechpaket 10 jeweils mindestens einen Radialkanal 16 bilden, der in Radialrichtung verläuft. In dem üblichen Fall, dass das Ständerblechpaket 10 in der Schnittebene gesehen eine quadratische Außenkontur aufweist, verläuft vorzugsweise in Richtung jeder Ecke der quadratischen Außenkontur jeweils ein Radialkanal 16. Die Radialkanäle 16 verbinden die ersten Ständeraxialkanäle 12' strömungstechnisch mit dem Läuferinnenraum 11. Im Falle der quadratischen Außenkontur des Ständerblechpakets 10, in dem die Radialkanäle 16 in Richtung der Diagonalen der quadratischen Außenkontur verlaufen, sind dementsprechend die ersten Ständeraxialkanäle 12' vorzugsweise in der Nähe der Ecken der quadratischen Außenkontur angeordnet, und zwar vorzugsweise auf den Diagonalen der quadratischen Außenkontur.

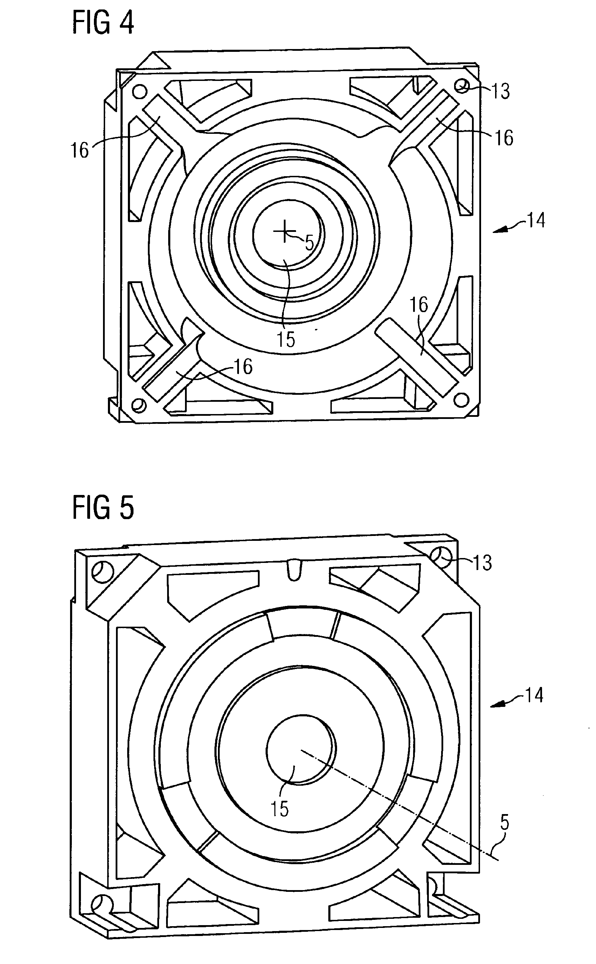

Jeder Radialkanal 16 verbindet mindestens einen der ersten Ständeraxialkanäle 12' strömungstechnisch mit dem Läuferinnenraum 11. Gemäß den FIG 5 bis 9 werden von jedem Radialkanal 16 sogar drei derartige Ständeraxialkanäle 12' überdeckt. Die überdeckten Ständeraxialkanäle 12' sind hierbei in Radialrichtung gesehen hintereinander angeordnet.

Die Schutzart, in welcher die Abdeckungen 14 den Läuferinnenraum 11 kapseln, soll erhalten bleiben. Die Radialkanäle 16 verbinden daher zwar die ersten Ständeraxialkanäle 12' strömungstechnisch mit dem Läuferinnenraum 11, sind aber im Übrigen geschlossen.

Auf Grund der bisher beschriebenen Ausgestaltung ist ein geschlossener Luftkreislauf möglich, der zunächst axial durch die Läuferaxialkanäle 8, sodann durch die Radialkanäle 16 der einen Abdeckung 14 nach radial außen, sodann axial durch die ersten Ständeraxialkanäle 12' und schließlich durch die Radialkanäle 16 der anderen Abdeckung 14 nach radial innen führt. Um diesen Luftkreislauf zu erzwingen, also eine Zwangskonvektion herbeizuführen, ist auf der Läuferwelle 3 axial innerhalb der Abdeckungen 14 mindestens ein als Lüfter wirkendes Element 17 angeordnet. In Ausnahmefällen können axial beidseits des Läuferblechpakets 7 derartige Elemente 17 angeordnet sein. Das Element 17 bzw. die Elemente 17 kann (können) hierbei insbesondere mit der Läuferwelle 3 stoffschlüssig verbunden sein. Beispielsweise kann das Element 17 bzw. können die Elemente 17 an den Läufer 6 angegossen sein.

Im Betrieb der elektrischen Maschine, d. h. beim Rotieren der Läuferwelle 3 um ihre Wellenachse 5 wird auf Grund des Vorhandenseins des Elements 17 bzw. der Elemente 17 die obenstehend erläuterte Konvektion bewirkt. Der entsprechende Luftstrom ist in FIG 4 gestrichelt angedeutet.

Auf Grund der erfindungsgemäßen Ausgestaltung wird in erheblich besserer Weise als im Stand der Technik die im Läufer 6 entstehende Abwärme auf den Ständer 1 abgeführt. Von dort kann sie relativ leicht nach außen abgeführt werden. Auf Grund der erfindungsgemäßen Ausgestaltung ist beispielsweise gegenüber einer vergleichbaren elektrischen Maschine des Standes der Technik eine Leistungssteigerung um 15 bis 20 % möglich.

Die zweiten Ständeraxialkanäle 12" sind strömungstechnisch vom Läuferinnenraum 11 getrennt. Wie insbesondere aus FIG 8 ersichtlich ist, sind die weiteren Ständeraxialkanäle 12" in der Schnittebene gesehen vorzugsweise nicht direkt auf den Diagonalen der quadratischen Außenkontur angeordnet.

Gemäß FIG 8 sind die ersten Ständeraxialkanäle 12' in Radialrichtung gesehen hintereinander angeordnet. Demgegenüber sind die Ständeraxialkanäle 12 bei der elektrischen Maschine des Standes der Technik (siehe FIG 2) in mehreren konzentrischen Ringen angeordnet, wobei die Ständeraxialkanäle 12 von Ring zu Ring gegeneinander auf Lücke gesetzt sind. Dies ist jedoch nicht erfindungswesentlich.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Elektrische Maschine
- wobei die elektrische Maschine einen Ständer (1) und eine Läuferwelle (3) aufweist,
- wobei die Läuferwelle (3) relativ zum Ständer (1) um eine Wellenachse (5) drehbar gelagert ist, so dass die Wellenachse (5) eine Axialrichtung, eine Radialrichtung und eine Tangentialrichtung definiert,
- wobei auf der Läuferwelle (3) ein Läufer (6) angeordnet ist, der mit dem Ständer (1) elektrisch zusammenwirkt,
- wobei der Läufer (6) mindestens einen axial durchgehenden Läuferaxialkanal (8) aufweist,
- wobei der Ständer (1) ein Ständerblechpaket (10) aufweist, das sich in Axialrichtung gesehen über den Läufer (6) erstreckt,
- wobei das Ständerblechpaket (10) in einer zur Axialrichtung orthogonalen Schnittebene gesehen den Läufer (6) vollständig umgibt, so dass in der Schnittebene gesehen ein geschlossener Läuferinnenraum (11) gebildet ist,
- wobei auf das Ständerblechpaket (10) axial beidseitig jeweils eine Abdeckung (14) aufgesetzt ist,
- wobei mindestens eine der Abdeckungen (14) eine Mittenausnehmung (15) für den Durchtritt der Läuferwelle (3) aufweist,
- wobei das Ständerblechpaket (10) mindestens einen in Axialrichtung gesehen durchgehenden Ständeraxialkanal (12') aufweist, der in der Schnittebene gesehen vollständig geschlossen ist,
- wobei die Abdeckungen (14) derart ausgebildet sind, dass sie im Zusammenwirken mit dem Ständerblechpaket (10) jeweils mindestens einen in Radialrichtung verlaufenden Radialkanal (16) bilden,
- wobei die Radialkanäle (16) den mindestens einen Ständeraxialkanal (12') strömungstechnisch mit dem Läuferinnenraum (11) verbinden, im Übrigen aber geschlossen sind,
- wobei zum Erzwingen einer Zwangskonvektion auf der Läuferwelle (3) axial innerhalb der Abdeckungen (14) mindestens ein als Lüfter wirkendes Element (17) angeordnet ist,
- wobei das Ständerblechpaket (10) weitere, in Axialrichtung gesehen durchgehende Ständeraxialkanäle (12") aufweist, die strömungstechnisch von dem Läuferinnenraum (11) getrennt sind.

2. Elektrische Maschine nach Anspruch 1,
**dadurch gekennzeichnet,**
**dass** das Ständerblechpaket (10) in der Schnittebene gesehen eine quadratische Außenkontur aufweist und dass in der Nähe jeder Ecke der quadratischen Außenkontur jeweils mindestens ein Ständeraxialkanal (12') angeordnet ist.

3. Elektrische Maschine nach Anspruch 2,
**dadurch gekennzeichnet,**
**dass** die Ständeraxialkanäle (12') auf den Diagonalen der quadratischen Außenkontur angeordnet sind.

4. Elektrische Maschine nach Anspruch 2 oder 3,
**dadurch gekennzeichnet,**
**dass** die weiteren Ständeraxialkanäle (12") in der Schnittebene gesehen nicht direkt auf den Diagonalen der quadratischen Außenkontur angeordnet sind.

5. Elektrische Maschine nach einem der obigen Ansprüche,
**dadurch gekennzeichnet,**
**dass** die Abdeckungen (14) und das Ständerblechpaket (10) den Läuferinnenraum (11) in der Schutzart IP55 oder besser kapseln.

6. Elektrische Maschine nach einem der obigen Ansprüche,
**dadurch gekennzeichnet,**
**dass** die Läuferwelle (3) in den Abdeckungen (14) gelagert ist.

7. Elektrische Maschine nach einem der obigen Ansprüche,
**dadurch gekennzeichnet,**
**dass** der Läufer (6) ein Läuferblechpaket (7) aufweist, das seinerseits eine Läuferwicklung (7a) oder Permanentmagnete trägt.

8. Elektrische Maschine nach einem der obigen Ansprüche,
**dadurch gekennzeichnet,**
**dass** das als Lüfter wirkende Element (17) mit der Läuferwelle (3) oder dem Läufer (6) stoffschlüssig verbunden ist, insbesondere an den Läufer (6) angegossen ist.

## Claims

1. Electric machine
- wherein the electric machine has a stator (1) and a rotor shaft (3),
- wherein the rotor shaft (3) is mounted in such a way that it can rotate relative to the stator (1) about a shaft axis (5), with the result that the shaft axis (5) defines an axial direction, a radial direction and a tangential direction,
- wherein a rotor (6), which interacts electrically with the stator (1), is arranged on the rotor shaft (3),
- wherein the rotor (6) has at least one axially continuous rotor axial channel (8),
- wherein the stator (1) has a stator laminate stack (10), which extends over the rotor (6), when viewed in the axial direction,
- wherein the stator laminate stack (10) completely surrounds the rotor (6), when viewed in a sectional plane orthogonal to the axial direction, with the result that a closed rotor interior (11) is formed, when viewed in the sectional plane,
- wherein in each case one cover (14) is positioned axially on both sides on the stator laminate stack (10),
- wherein at least one of the covers (14) has a central cutout (15) through which the rotor shaft (3) passes,
- wherein the stator laminate stack (10) has at least one stator axial channel (12'), which is continuous when viewed in the axial direction and is completely closed when viewed in the sectional plane,
- wherein the covers (14) are designed in such a way that, in interaction with the stator laminate stack (10), they form in each case at least one radial channel (16) running in the radial direction,
- wherein the radial channels (16) connect the at least one stator axial channel (12') in terms of flow to the rotor interior (11), but are otherwise closed,
- wherein, in order to necessarily induce forced convection, at least one element (17) acting as a fan is arranged on the rotor shaft (3) axially within the covers (14),
- wherein the stator laminate stack (10) has further stator axial channels (12"), which are continuous when viewed in the axial direction and are separated in terms of flow from the rotor interior (11).

2. Electric machine according to Claim 1, **characterized in that** the stator laminate stack (10) has a square outer contour, when viewed in the sectional plane, and **in that** in each case at least one stator axial channel (12') is arranged in the vicinity of each corner of the square outer contour.

3. Electric machine according to Claim 2, **characterized in that** the stator axial channels (12') are arranged on the diagonals of the square outer contour.

4. Electric machine according to Claim 2 or 3, **characterized in that** the further stator axial channels (12") are not arranged directly on the diagonals of the square outer contour, when viewed in the sectional plane.

5. Electric machine according to one of the above claims, **characterized in that** the covers (14) and the stator laminate stack (10) encapsulate the rotor interior (11) with protection class IP55 or higher.

6. Electric machine according to one of the above claims, **characterized in that** the rotor shaft (3) is mounted in the covers (14).

7. Electric machine according to one of the above claims, **characterized in that** the rotor (6) has a rotor laminate stack (7), which for its part bears a rotor winding (7a) or permanent magnets.

8. Electric machine according to one of the above claims, **characterized in that** the element (17) acting as a fan is connected cohesively to the rotor shaft (3) or the rotor (6), in particular is cast on the rotor (6).

## Revendications

1. Machine électrique
- dans laquelle la machine électrique a un stator ( 1 ) et une arbre ( 3 ) de rotor,
- dans laquelle l'arbre ( 3 ) du rotor est monté tournant par rapport au stator ( 1 ) autour d'un axe ( 5 ) de l'arbre, de sorte que l'axe ( 5 ) de l'arbre définit une direction axiale, une direction radiale et une direction tangentielle,
- dans laquelle sur l'arbre ( 3 ) de rotor est monté un rotor ( 6 ) qui coopère électriquement avec le stator ( 1 ),
- dans laquelle le rotor ( 6 ) a au moins un canal ( 8 ) axial de rotor continu axialement,
- dans laquelle le stator ( 1 ) comporte un paquet ( 10 ) de tôles de stator, qui s'étend, considéré dans la direction axiale, sur le rotor ( 6 ),
- dans laquelle le paquet ( 10 ) de tôles de stator entoure complètement le rotor ( 6 ), considéré dans un plan de coupe orthogonal à la direction axiale, de manière à former un espace ( 11 ) intérieur de rotor fermé, considéré dans le plan de coupe,
- dans laquelle un recouvrement ( 14 ) est mis axialement des deux côtés sur le paquet ( 10 ) de tôles de stator,
- dans laquelle au moins l'un des recouvrements ( 14 ) comporte un évidement ( 15 ) médian pour le passage de l'arbre ( 3 ) du rotor,
- dans laquelle le paquet ( 10 ) de tôles de stator a au moins un canal ( 12' ) axial de stator continu, considéré dans la direction axiale, qui est fermé complètement considéré dans le plan de coupe,
- dans laquelle les recouvrements ( 14 ) sont tels qu'ils forment en coopération avec le paquet ( 10 ) de tôles de stator respectivement au moins un canal ( 16 ) radial s'étendant dans la direction radiale,
- dans laquelle les canaux ( 16 ) radiaux mettent le au moins un canal ( 12' ) axial de stator fluidiquement en communication avec l'espace ( 11 ) intérieur du rotor, mais pour le reste sont fermés,
- dans laquelle, pour forcer une convexion forcée, au moins un élément ( 17 ) agissant comme ventilateur est monté sur l'arbre ( 3 ) du rotor axialement à l'intérieur des recouvrements ( 14 ),
- dans laquelle le paquet ( 10 ) de tôles de stator comporte d'autres canaux ( 12" ) axiaux de stator continus, considéré dans la direction axiale, qui sont séparés en technique d'écoulement de l'espace ( 11 ) intérieur du rotor.

2. Machine électrique suivant la revendication 1,
**caractérisé**
**en ce que** le paquet ( 10 ) de tôles de stator a, considéré dans le plan de coupe, un contour extérieur carré et en ce qu'à proximité de chaque sommet du contour extérieur carré est disposé respectivement au moins un canal ( 12' ) axial de stator.

3. Machine électrique suivant la revendication 2
**caractérisé**
**en ce que** les canaux ( 12' ) axiaux de stator sont disposés sur les diagonales du contour extérieur carré.

4. Machine électrique suivant la revendication 2 ou 3,
**caractérisé**
**en ce que** les autres canaux ( 12' ) axiaux de stator ne sont pas disposés, considéré dans le plan de coupe, directement sur les diagonales du contour extérieur carré.

5. Machine électrique suivant l'une des revendications précédentes,
**caractérisé**
**en ce que** les recouvrements ( 14 ) et le paquet ( 10 ) de tôles de stator encapsulent, à la manière d'une protection IP55 ou mieux, l'espace ( 11 ) intérieur du rotor.

6. Machine électrique suivant l'une des revendications précédentes,
**caractérisé**
**en ce que** l'arbre ( 3 ) du rotor est monté dans les recouvrements ( 14 ).

7. Machine électrique suivant l'une des revendications précédentes,
**caractérisé**
**en ce que** le rotor ( 6 ) comporte un paquet ( 7 ) de tôles de rotor, qui porte, de son côté, un enroulement ( 7a ) de rotor ou des aimants permanents.

8. Machine électrique suivant l'une des revendications précédentes,
**caractérisé**
**en ce que** l'élément ( 17 ) agissant comme ventilateur est relié à complémentarité de matière avec l'arbre ( 3 ) du rotor ou avec le rotor ( 6 ), en étant notamment coulé sur le rotor ( 6 ).
